# EUROPÄISCHE PATENTSCHRIFT

(11) **EP 3 226 086 B1**
(45) Veröffentlichungstag und Bekanntmachung des Hinweises auf die Patenterteilung: **19.10.2022**
(21) Anmeldenummer: 16305389.5
(22) Anmeldetag: 01.04.2016
(51) Int. Cl.: G05B 15/02

(54) **VERFAHREN ZUR INBETRIEBNAHME VON BEDIENMODULEN EINES GEBÄUDEAUTOMATIONSSYSTEMS**
METHOD FOR PUTTING INTO OPERATION CONTROL MODULES OF A BUILDING AUTOMATION SYSTEM
PROCEDE DE MISE EN SERVICE DE MODULES DE COMMANDE D'UN SYSTEME D'AUTOMATISATION DE BATIMENT

(43) Veröffentlichungstag der Anmeldung: 04.10.2017
(73) Patentinhaber: SOMFY ACTIVITES SA, 74300 Cluses (FR)
(72) Erfinder: MUGNIER, Mickael, 74130 Bonneville (FR); MOMMAERTS, Dirk, 72145 Hirrlingen (DE)
(74) Vertreter: Lavoix

(56) Entgegenhaltungen:
- EP-A2- 2 219 088
- US-A1- 2001 039 460
- US-A1- 2013 123 991
- US-A1- 2016 062 861
- US-B1- 6 240 336

## Beschreibung

Die vorliegende Erfindung betrifft ein Verfahren zur Inbetriebnahme eines mit einer Benutzerschnittstelle ausgerüsteten Steuerungsmoduls, das dazu bestimmt ist, an Gebäudewänden montiert zu werden und einen Aktor eines Gebäudeautomationssystems sowohl manuell durch einen menschlichen Nutzer als auch automatisch zu steuern, wobei das Steuerungsmodul zwecks Stromversorgung und Datenaustausch an einem Parametriergerät angeschlossen wird.

Diese Steuerungsmodule dienen zur Bedienung und Steuerung von Aktoren von Gebäudeautomationssystemen. So können mittels dieser Steuerungsmodule etwa Motoren von Rollläden oder Jalousien oder Lampen angesteuert werden.

US 2013/0123991 A1 betrifft einen Thermostat- und Bewässerungscontroller mit einer von einer Basiseinheit abnehmbaren Benutzerschnittstelle, die mit einem externen Computer konfiguriert werden kann. Die Basiseinheit und die Benutzerschnittstelleneinheit sind über eine I/O Verbindung verbunden, die eine bidirektionale Kommunikation und eine Stromversorgung erlaubt. Die Basiseinheit kann an einer Wand befestigt sein. Die Benutzerschnittstelle kann über ein Kabel mit einem PC, Tablet PC oder Smartphone für eine Konfiguration verbunden werden.

US 2001/0039460 A1 betrifft ein Haushaltsgerät wie einen Ofen. Der Ofen umfasst ein Kontollsystem. Eine Fernbedienung ist vorgesehen, um Programme zu dem Haushaltsgerät zu übertragen, zum Beispiel um die Uhrzeit auf dem Haushaltsgerät zu aktualisieren.

US 2016/0062861 A1 betrifft ein Verfahren um ein Kontrollgerät zu testen, insbesondere für die Automobilindustrie und die Flugzeugindustrie. Dabei wird eine Schnittstelle eines Testgeräts mit einer Kontrolleinheit über Kabel verbunden, um mittels eines Modells im Testgerät die Kontrolleinheit zu testen. Das Modell kann ein Modell eines Motors sein, der durch die Kontrolleinheit gesteuert werden soll.

EP 2 219 088 A2 betrifft ein Verfahren und ein Gerät zur elektronischen Simulation eines Verbrennungsmotors, um ein Diagnosegerät zu überprüfen. Das Diagnosegerät wird über ein Kabel mit dem Simulationsgerät verbunden. Über Schalter am Simulationsgerät werden Fehlerfunktionen aktiviert. Die Messergebnisse werden auf dem Simulationsgerät oder dem Diagnosegerät angezeigt.

US 6,240,336 B1 betrifft eine Steuereinheit für ein Bewässerungssystem. Die Steuereinheit umfasst ein Display und eine Tastatur. Ferner umfasst die Steuereinheit eine Buchse für einen Stecker mit dem die Steuereinheit mit einer externen Einheit verbunden werden kann. Die Steuereinheit kann in einen Kasten eingesetzt werden, der elektrische Kontakte aufweist, die in eine Öffnung der Steuereinheit gesteckt werden. Über die Buchse kann ein Bewässerungsprogramm auf einen externen Speicher übertragen und von dem externen Speicher auf den internen Speicher der Steuereinheit übertragen werden.

Aufgabe der vorliegenden Erfindung ist es, den Funktionsumfang dieses bekannten Parametriergeräts zu erweitern. Insbesondere sollen neue Verfahren angegeben werden, die mit dem Parametriergerät durchgeführt werden können, und die die Inbetriebnahme der besagten Steuerungsmodule weiter vereinfachen.

Erfindungsgemäß wird diese Aufgabe gelöst mit dem Verfahren nach Anspruch 1.

Durch das erfindungsgemäße Austauschen von Datum und Uhrzeit mit dem Parametriergerät ist das Einstellen des Datums und der Uhrzeit von Steuerungsmodulen besonders einfach und schnell. Das Datum und die Uhrzeit müssen nicht mehr manuell ins Steuerungsmodul eingegeben werden, sondern können mittels des Parametriergeräts direkt aufgespielt werden.

Die Erfindung betrifft auch ein Verfahren zum Kopieren der aktuellen Uhrzeit und/oder des aktuellen Datums von einem ersten Steuerungsmodul zu einem zweiten Steuerungsmodul gemäß Anspruch 2.

Gemäß vorteilhaften Ausführungsformen wird umfasst das erfindungsgemäße Verfahren mehrere oder alle Merkmale von Ansprüchen 3 bis 4, in allen technisch möglichen Kombinationen.

Durch das Vorsehen einer Funktionsprüfung mit dem Parametriergerät können die Einstellungen eines Steuerungsmoduls bequem kontrolliert werden. Insbesondere kann auf eine Funktionsprüfung nach erfolgter Montage des Steuerungsmoduls verzichtet werden, wodurch auch eine damit einhergehende Betätigung des entsprechenden Aktors entfällt.

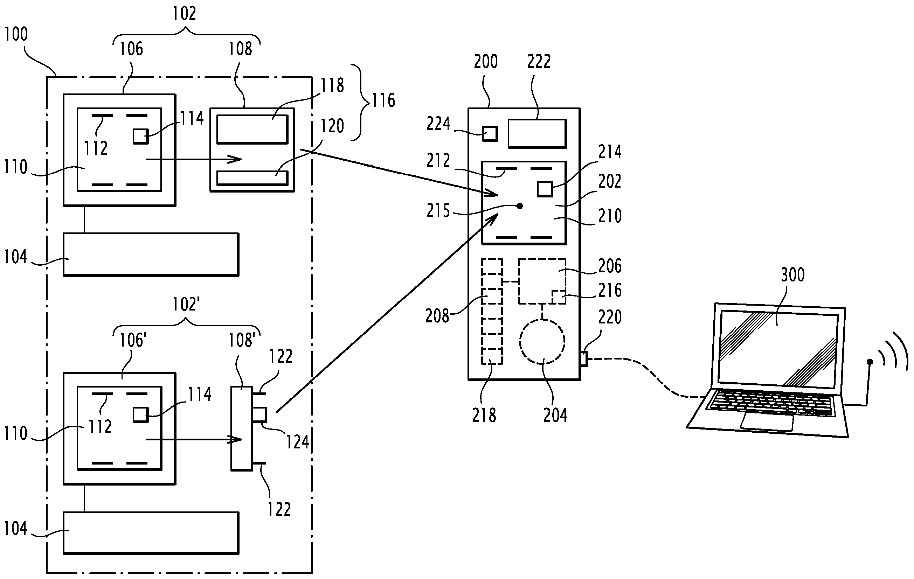

Die Erfindung wird nun anhand der einzigen Figur im Detail beschrieben.

Die Figur zeigt ein Gebäudeautomationssystem 100, das durch das strichpunktierte Rechteck abgegrenzt ist. Es umfasst zwei Wandbedienvorrichtungen 102, 102' sowie zwei über jeweils eine der Wandbedienvorrichtungen 102, 102' ansteuerbare Aktoren 104. Bei den Aktoren 104 kann es sich bspw. um Antriebsmotoren von Rollläden, Jalousien oder Markisen handeln. Über eine Wandbedienvorrichtung 102, 102' kann ein Benutzer also z. B. manuell einen Rollladen hoch- und runterfahren. Zusätzlich kann eine Wandbedienvorrichtung 102, 102' z.B. im Falle eines Rollladens oder ähnlichem diesen automatisch steuern, sodass dieser sich z. B. zu bestimmten Uhrzeiten hebt oder senkt oder in Abhängigkeit von Wetterbedingungen verfahren wird.

Die Wandbedienvorrichtungen 102, 102' umfassen zwei Teile, nämlich eine Wanddose 106, 106' und ein Steuerungsmodul 108, 108'. Das Steuerungsmodul 108, 108' lässt sich in die Wanddose 106, 106' einstecken und von dieser entfernen.

Die Wanddose 106, 106' ist an das Stromnetz angeschlossen. Sie verfügt über einen Sitz 110, in welchem das Steuerungsmodul 108, 108' aufnehmbar ist. In dem Sitz 110 sind mehrere Befestigungsschlitze 112 zur mechanischen Befestigung des Steuerungsmoduls 108, 108' ausgebildet. Zusätzlich verfügt der Sitz 110 über eine Strom- und Datenbuchse 114 zum elektrischen Anschließen des Steuerungsmoduls 108, 108'.

Die Figur zeigt ein Steuerungsmodul einmal in einer Frontansicht (108, oben) und einmal in einer Seitenansicht (108', unten). Das Steuerungsmodul 108, 108' verfügt über eine Benutzerschnittstelle 116, mit welcher Einstellungen am Steuerungsmodul vorgenommen werden können und der zugeordnete Aktor 104 angesteuert werden kann. Die Benutzerschnittstelle 116 umfasst bspw. eine Modulanzeige 118 und ein Tastenfeld 120.

An der Rückseite des Steuerungsmoduls 108, 108' befinden sich mehrere Befestigungszungen 122, die zur Befestigung des Steuerungsmoduls 108, 108' im Sitz 110 der Wanddose 106, 106' dienen. Ebenfalls an der Rückseite ist ein elektrischer Stecker 124 vorgesehen, der in die Strom- und Datenbuchse 114 des Sitzes 110 passt.

Erfindungsgemäß ist ein Parametriergerät 200 zur vereinfachten und schnelleren Parametrierung von Steuerungsmodulen 108, 108' vorgesehen. Diese Parametriergerät 200 umfasst:
a) eine Modulschnittstelle 202 zum Anschließen eines zu parametrierenden Steuerungsmoduls 108, 108' an das Parametriergerät 200 zwecks Stromversorgung des Steuerungsmoduls 108, 108' und zum Austausch von Parametrierungsdatensätzen zwischen dem Steuerungsmodul 108, 108' und dem Parametriergerät 200;
b) eine Stromquelle 204 zur Stromversorgung des Parametriergeräts 200, die zur gleichzeitigen Stromversorgung eines angeschlossenen Steuerungsmoduls 108, 108' mit der Modulschnittstelle 202 verbunden ist;
c) eine elektronische Steuereinheit 206 zur Steuerung des Parametriergeräts 200 sowie zum Austausch von Steuerungsbefehlen mit einem über die Modulschnittstelle 202 angeschlossenen Steuerungsmodul 108, 108'; und
d) einen von der elektronischen Steuereinheit 206 verwalteten Datenspeicher 208 zur Speicherung mindestens eines Parametrierungsdatensatzes.

Die Modulschnittstelle 202 ist in Form einer Aufnahme 210, insbesondere einer Mulde, ausgebildet, mit Befestigungsmitteln, insbesondere Schlitzen 212 zur mechanischen Befestigung eines Steuerungsmoduls 108, 108', und mit einer elektrischen Steckverbindung, insbesondere einer Parametriergerätbuchse 214, zur Stromversorgung eines angeschlossenen Steuerungsmoduls 108, 108' und zum Datenaustausch mit demselben. Optional kann in der Mulde 210 auch noch ein Reset-Knopf 215 untergebracht sein.

Bei der Stromquelle 204 handelt es sich vorzugsweise um ein Batteriemodul, z. B. zwei 1,5 V Batterien. Dadurch ist das Parametriergerät autonom und benötigt keine externe Stromquelle.

Die elektronische Steuereinheit 206 ist bevorzugt ein Mikroprozessor, der den Betrieb des Parametriergeräts 200 steuert. Er wird über die Batterien 204 mit Strom versorgt. Der Mikroprozessor 206 besitzt vorzugsweise einen Zeit- und Datumsgeber 216, der die aktuelle Zeit und das aktuelle Datum vorhält.

Der Datenspeicher 208 umfasst mehrere Speicherplätze 218 für je einen Parametrierungsdatensatz. Ein Parametrierungsdatensatz umfasst z. B. Befehlskonfigurationen und/oder Zeitangaben für eine Zeitschaltuhrfunktion.

Zusätzlich kann das Parametriergerät 200 eine Computerschnittstelle 220 umfassen, insbesondere einen USB-Anschluss, zum Anschließen des Parametriergeräts 200 an einen Computer 300.

Des Weiteren kann das Parametriergerät 200 eine Betriebsanzeige 222, insbesondere eine oder mehrere Leuchtdioden, zur Signalisierung des Betriebszustands des Parametriergeräts 200 an dessen Nutzer aufweisen. Das Parametriergerät 200 kann auch noch einen An-Schalter 224 haben.

Das Parametriergerät 200 kann in einem ersten Modus, einem sogenannten Datenkopiermodus, eingesetzt werden. In diesem Datenkopiermodus wird ein erstes Steuerungsmodul 108 von seiner Wanddose 106 entfernt und in die Modulschnittstelle 202 des Parametriergeräts 200 eingesetzt. Das Parametriergerät wird mittels des An-Schalters 224 eingeschaltet. Dadurch wird das angeschlossene Steuerungsmodul 108 über die Batterien 204 mit Strom versorgt und in Betrieb gesetzt. Mittels der Benutzerschnittstelle 116, die als Benutzerschnittstelle des Parametriergeräts 200 fungiert, kann nun der Datenkopiermodus ausgewählt werden. Dadurch wird ein Parametrierungsdatensatz, der in dem angeschlossenen Steuerungsmodul 108 gespeichert ist, in einen der Speicherplätze 218 des Datenspeichers 208 kopiert. Wenn der Kopiervorgang abgeschlossen ist, wird das Steuerungsmodul 108 aus dem Parametriergerät 200 entfernt und wieder in seine Wanddose 106 gesteckt.

Sodann wird ein zweites noch nicht parametriertes Steuerungsmodul 108' in das Parametriergerät 200 gesteckt. Mit Hilfe der Benutzerschnittstelle 116 des zweiten Steuerungsmoduls 108' wird der zuvor im Datenspeicher 208 abgelegte Parametrierungsdatensatz auf das zweite Steuerungsmodul 108' aufgespielt. Auf diese Weise können mehrere Steuerungsmodule 108, 108' sehr schnell und sehr bequem parametriert werden. Insbesondere kann eine Parametrierung fern der Wanddosen 106, 106' erfolgen.

Durch das Vorhandensein mehrerer Speicherplätze 218 können auch verschiedene Parametrierungsdatensätze von verschiedenen Steuerungsmodulen in das Parametriergerät 200 kopiert werden. So kann bei der Parametrierung eines neuen Steuerungsmoduls 108, 108' zwischen verschiedenen Parametrierungsdatensätzen in den verschiedenen Speicherplätzen 218 ausgewählt werden.

Ein zweiter Modus des Parametriergeräts 200 ist ein sogenannter Zeitkopiermodus. Hier können auf die soeben beschriebene Weise anstelle von Parametrierungsdatensätzen die aktuelle Uhrzeit und das aktuelle Datum zwischen Steuerungsmodulen 108, 108' und Parametriergerät 200 hin und her kopiert werden. Dabei können die aktuelle Uhrzeit und das aktuelle Datum beim Kopieren dem Nutzer über die Modulanzeige 118 angezeigt werden.

Die in den Steuerungsmodulen 108, 108' abgelegten Daten sowie die Uhrzeit und das Datum werden bei Verlust der externen Stromversorgung noch einige Zeit in einem flüchtigen Speicher gehalten. Hierzu verfügt jedes Steuerungsmodul über einen Kondensator, insbesondere einen Superkondensator, der die zum Halten der Informationen nötige Energie liefert. Dies ermöglicht die oben beschriebenen Kopiervorgänge.

In einem dritten Modus des Parametriergeräts 200, einem sogenannten Versorgungsmodus, wird dieses ausschließlich als Stromversorgung für ein aufgestecktes Steuerungsmodul 108, 108' verwendet. So kann das Steuerungsmodul 108, 108' mittels seiner Benutzerschnittstelle 116 genauso eingestellt werden, wie wenn es in einer Wanddose 106, 106' montiert wäre. Von Vorteil dabei ist, dass sich das Steuerungsmodul 108, 108' bequemer einstellen lässt, wenn es sich im Parametriergerät 200 befindet, als wenn es an der Wand montiert ist.

Das Parametriergerät 200 kann weiterhin in einem vierten Modus, einem sogenannten Computermodus, betrieben werden. Hierzu wird das Parametriergerät über seine Computerschnittstelle 220 mit einem Computer 300, z. B. einem Laptop verbunden.

Auf dem Computer 300 befindet sich eine Software, mittels welcher bequem verschiedene Parametrierungsdatensätze erstellt und auf die verschiedenen Speicherplätze des Datenspeichers 208 übertragen werden können. Genauso können im Datenspeicher 208 befindliche Parametrierungsdatensätze auf den Computer 300 überspielt werden.

Beispielhaft kann mittels der besagten Software für ein Steuerungsmodul 108, 108' eines Antriebsmotors 104 eines Rollladens ein Parametrierungsdatensatz mit den folgenden Einstellungen erzeugt werden:
- Öffnung des Rollladens jeden Morgen um 7h, außer an Wochenenden;
- Öffnung des Rollladens an Wochenenden um 8h;
- Teilweises Schließen des Rollladens um 19h30;
- Vollständiges Schließen des Rollladens um 20h.

Des Weiteren kann im Computermodus der Computer 300 seine Systemzeit und - datum an das Parametriergerät 200 übertragen, um den Zeit- und Datumsgeber 216 nachzustellen. Wenn der Computer mit dem Internet verbunden ist, kann sogar die exakte Zeit und das exakte Datum aus einer Quelle im Internet auf das Parametriergerät 200 überspielt werden.

Das Parametriergerät 200 verfügt weiterhin über einen fünften Betriebsmodus, einen sogenannten Demonstrationsmodus.

In diesem Modus kann ein Nutzer prüfen, ob ein in das Parametriergerät 200 gestecktes Steuerungsmodul 108, 108' ordnungsgemäß funktioniert. Dazu gibt der Nutzer mittels der Benutzerschnittstelle 116 Befehle in das Steuerungsmodul 108, 108' ein, als ob er einen an das Steuerungsmodul 108, 108' angeschlossenen Aktor 104 steuern wollte. So können z.B. Befehle zum Öffnen oder Schließen eines Rollladens oder zum An- oder Ausschalten einer Lampe simuliert werden. Die vom Steuerungsmodul 108, 108' abgegebenen Steuerungssignale werden vom Parametriergerät 200 empfangen. Wenn es sich um Befehle zum Öffnen oder Schließen eines Rollladens oder ähnlichem handelt, können Leuchtdioden der Betriebsanzeige 222 dem Nutzer den ordnungsgemäßen Empfang dieser Befehle signalisieren. Der Nutzer kann auch anhand der Modulanzeige 118 erkennen, ob das Steuerungsmodul 108, 108' wie erwünscht arbeitet.

Mit dem Demonstrationsmodus kann auch ein längerer Zeitraum wie etwa eine Woche im Zeitraffer simuliert werden. Dabei liefert das Parametriergerät 200 dem angeschlossenen Steuerungsmodul 108, 108' beschleunigte Zeitsignale. Das Steuerungsmodul 108, 108' führt dann im Zeitraffer die über seine Zeitschaltuhrfunktion programmierten Befehle aus. So kann ein Nutzer überprüfen, ob die Zeitschaltuhrfunktion richtig eingestellt ist und ordnungsgemäß funktioniert.

## Patentansprüche

1. Verfahren zur Inbetriebnahme eines mit einer Benutzerschnittstelle (116) ausgerüsteten Steuerungsmoduls (108) einer zweiteiligen Wandbedienvorrichtung umfassend eine Wanddose (106) und das Steuerungsmodul (108), wobei das Steuerungsmodul (108) sich in die Wanddose (106) einstecken und von dieser entfernen lässt, wobei das Steuerungsmodul an seiner Rückseite mehrere Befestigungszungen (122) aufweist, die zur Befestigung des Steuerungsmoduls (108) im Sitz der Wanddose dienen, und an der Rückseite des Steuerungsmoduls ein elektrischer Stecker (124) vorgesehen ist, der in eine Strom- und Datenbuchse (114) des Sitzes passt, wobei das Steuerungsmodul dazu bestimmt ist, einen Aktor (104) eines Gebäudeautomationssystems (100) zu steuern, sowohl manuell durch einen menschlichen Nutzer über die Wandbedienvorrichtung als auch automatisch, wobei das Steuerungsmodul (108) zwecks Stromversorgung und Datenaustausch an einem Parametriergerät (200) angeschlossen wird, wobei die Benutzerschnittstelle (116) des Steuerungsmoduls eine Modulanzeige (118) umfasst, **dadurch gekennzeichnet, dass** das Parametriergerät eine Modulschnittstelle (202) zum Anschließen eines Steuerungsmodules an das Parametriergerät zwecks Stromversorgung des Steuerungsmodules (108) und zum Austausch von Parametrierungsdatensätzen zwischen dem Steuerungsmodul (108) und dem Parametriergerät (200) umfasst, wobei die Modulschnittstelle (202) in Form einer Aufnahme (210) mit Befestigungsmitteln (212) zur mechanischen Befestigung eines Steuermodules (108, 108') und mit einer elektrischen Steckverbindung zur Stromversorgung eines angeschlossenen Steuerungsmodules und zum Datenaustausch mit demselben ausgebildet ist, wobei die aktuelle Uhrzeit und/oder das aktuelle Datum zwischen dem Parametriergerät (200) und dem Steuerungsmodul (108) ausgetauscht werden, wobei die aktuelle Uhrzeit und/oder das aktuelle Datum vom Parametriergerät (200) auf das Steuerungsmodul (108) kopiert werden oder vom Steuerungsmodul (108) auf das Parametriergerät (200) kopiert werden, wobei beim Austausch der aktuellen Uhrzeit und/oder des aktuellen Datums diese über die Benutzerschnittstelle (116) dem Nutzer angezeigt werden, wobei die Benutzerschnittstelle als Benutzerschnittstelle des Parametriergeräts fungiert, wobei zur Funktionsprüfung des Steuerungsmoduls (108) mindestens eine seiner Steuerungsfunktionen ausgelöst wird, wobei die durch die ausgelöste Steuerungsfunktion vom Steuerungsmodul (108) gesendeten Steuerungssignale vom Parametriergerät (200) empfangen werden, und wobei das Parametriergerät die empfangenen Steuerungssignale zwecks Kontrolle durch einen Nutzer diesem darstellt, wobei das Parametriergerät (200) die empfangenen Steuerungssignale mittels der Modulanzeige darstellt.

2. Verfahren zum Kopieren der aktuellen Uhrzeit und/oder des aktuellen Datums von einem ersten Steuerungsmodul (108) zu einem zweiten Steuerungsmodul (108), wobei mit dem ersten Steuerungsmodul (108) das Verfahren nach Anspruch 1 ausgeführt wird, mit der Maßgabe, dass die aktuelle Uhrzeit und/oder das aktuelle Datum vom Steuerungsmodul (108) auf das Parametriergerät (200) kopiert werden, und anschließend mit dem zweiten Steuerungsmodul (108) das Verfahren nach Anspruch 1 ausgeführt wird, mit der Maßgabe, dass die aktuelle Uhrzeit und/oder das aktuelle Datum vom Parametriergerät (200) auf das Steuerungsmodul (108) kopiert werden.

3. Verfahren nach Anspruch 1, wobei die Darstellung durch das Parametriergerät (200) mittels Leuchtdioden erfolgt, die sich am Parametriergerät befinden.

4. Verfahren nach einem der Ansprüche 1 oder 3, wobei die Auslösung der Steuerungsfunktion über die Benutzerschnittstelle (116) des Steuerungsmoduls erfolgt.

## Claims

1. A process for setting-up a control module (108), equipped with a user interface (116), of a two-part wall control device comprising a wall box (106) and the control module (108), whereby the control module (108) can be inserted into the wall box (106) and removed from it, whereby the control module's rear side has several mounting tabs (122) that are for fastening the control module (108) into the seat of the wall box, and whereby an electrical plug (124) is provided on the rear side of the control module, which fits into a current or data socket (114) of the seat, whereby the control module is intended to control an actuator (104) of a building automation system (100), both manually by a human user through the wall control device and automatically, whereby the control module (108) is connected to a parameterization device (200) for electrical supply and data exchange, whereby user interface (116) of the control module comprises a module display (118), **characterized in that** the parameterization device comprises a module interface (202) for connecting a control module to the parameterization device for the purpose of electrical supply to the control module (108) and exchange of parameterization data sets between the control module (108) and the parameterization device (200), whereby the module interface (202) is designed in the form of a receptacle (210) with fixing devices (212) to mechanically fix a control module (108, 108') and with an electrical plug connection for electrical supply to a connected control module and for data exchange with the same, whereby the current clock time and/or the current date are exchanged between the parameterization device (200) and the control module (108), whereby the current clock time and/or the current date are copied from the parameterization device (200) to the control module (108) or from the control module (108) to the parameterization device (200), whereby during the exchange of the current clock time and/or the current date, they are displayed to the user through the user interface (116), whereby the user interface functions as the user interface of the parameterization device, whereby for functional testing of the control module (108) at least one of its control functions is triggered, whereby the control signals triggered by the control function sent from the control module (108) are received by the parameterization device (200), and whereby the parameterization device shows the received control signals for monitoring by the user, whereby the parameterization device (200) shows the received control signals through the module display.

2. A process for copying the current clock time and/or current date from a first control module (108) to a second control module (108), whereby with the first control module (108) the process according to Claim 1 is executed, provided that the current clock time and/or the current date are copied from the control module (108) to the parameterization device (200), and then the process according to Claim 1 is executed with the second control module (108), provided that the current clock time and/or the current date are copied from the parameterization device (200) to the control module (108).

3. A process according to Claim 1, whereby display through the parameterization device (200) is done with light-emitting diodes that are on the parameterization device.

4. A process according to one of the Claims 1 or 3, whereby the control function is triggered from the user interface (116) of the control module.

## Revendications

1. Procédé de mise en service d'un module de commande (108), équipé d'une interface utilisateur (116), d'un dispositif de commande mural en deux parties comprenant un boîtier mural (106) et le module de commande (108), dans lequel le module de commande (108) peut être inséré dans le boîtier mural (106) et retiré de celui-ci, dans lequel le module de commande comporte sur sa face arrière plusieurs languettes de fixation (122), qui servent à fixer le module de commande (108) dans le siège du boîtier mural, et un connecteur électrique (124) est prévu sur la face arrière du module de commande, qui s'adapte dans une prise d'alimentation et de données (114) du siège, dans lequel le module de commande est destiné à commander un actionneur (104) d'un système domotique (100), à la fois manuellement par un utilisateur humain par l'intermédiaire du dispositif de commande mural et automatiquement, dans lequel le module de commande (108) est connecté à un appareil de paramétrage (200) en vue de l'alimentation électrique et de l'échange de données, dans lequel l'interface utilisateur (116) du module de commande comprend un affichage de module (118), **caractérisé en ce que** l'appareil de paramétrage comprend une interface de module (202) pour connecter un module de commande à l'appareil de paramétrage en vue de l'alimentation électrique du module de commande (108) et d'échanger des ensembles de données de paramétrage entre le module de commande (108) et l'appareil de paramétrage (200), dans lequel l'interface de module (202) est réalisée sous la forme d'un logement (210) avec des moyens de fixation (212) pour la fixation mécanique d'un module de commande (108, 108') et avec une connexion électrique enfichable pour l'alimentation électrique d'un module de commande raccordé et pour l'échange de données avec celui-ci, dans lequel l'heure actuelle et/ou la date actuelle sont échangées entre l'appareil de paramétrage (200) et le module de commande (108), dans lequel l'heure actuelle et/ou la date actuelle sont copiées à partir de l'appareil de paramétrage (200) sur le module de commande (108) ou sont copiées à partir du module de commande (108) sur l'appareil de paramétrage (200), dans lequel lors de l'échange de l'heure actuelle et/ou de la date actuelle, celles-ci sont affichées à l'utilisateur par l'intermédiaire de l'interface utilisateur (116), dans lequel l'interface utilisateur fait office d'interface utilisateur de l'appareil de paramétrage, dans lequel au moins une de ses fonctions de commande est déclenchée pour vérifier le fonctionnement du module de commande (108), dans lequel les signaux de commande envoyés par le module de commande (108) par la fonction de commande déclenchée sont reçus par l'appareil de paramétrage (200), et dans lequel l'appareil de paramétrage représente les signaux de commande reçus à un utilisateur en vue d'un contrôle par celui-ci, dans lequel l'appareil de paramétrage (200) représente les signaux de commande reçus au moyen de l'affichage du module.

2. Procédé de copie de l'heure actuelle et/ou de la date actuelle à partir d'un premier module de commande (108) vers un deuxième module de commande (108), dans lequel le procédé selon la revendication 1 est exécuté avec le premier module de commande (108), à condition que l'heure actuelle et/ou la date actuelle soient copiées à partir du module de commande (108) sur l'appareil de paramétrage (200), et ensuite le procédé selon la revendication 1 est exécuté avec le deuxième module de commande (108), à condition que l'heure actuelle et/ou la date actuelle soient copiées à partir de l'appareil de paramétrage (200) sur le module de commande (108).

3. Procédé selon la revendication 1, dans lequel la représentation par l'appareil de paramétrage (200) est effectuée au moyen de diodes lumineuses qui se trouvent sur l'appareil de paramétrage.

4. Procédé selon l'une quelconque des revendications 1 ou 3, dans lequel le déclenchement de la fonction de commande est effectué par l'intermédiaire de l'interface utilisateur (116) du module de commande.
